# EUROPÄISCHE PATENTSCHRIFT

(11) **EP 3 158 250 B1**
(45) Veröffentlichungstag und Bekanntmachung des Hinweises auf die Patenterteilung: **28.08.2019**
(21) Anmeldenummer: 15729181.6
(22) Anmeldetag: 16.06.2015
(51) Int. Cl.: F16L 53/38, F16L 55/027

(54) **FLUIDLEITUNG**
FLUID LINE
CONDUITE DE FLUIDE

(30) Priorität: 17.06.2014 DE 102014108494
(43) Veröffentlichungstag der Anmeldung: 26.04.2017
(60) Teilanmeldung: 19152261.4
(73) Patentinhaber: NORMA Germany GmbH, 63477 Maintal (DE)
(72) Erfinder: GRCIC, Dragan, Kanjiza 24420 (RS); MANN, Stephan, 63599 Biebergemünd (DE)
(74) Vertreter: Patentanwälte Olbricht Buchhold Keulertz
(86) Internationale Anmeldenummer: PCT/EP2015/063464
(87) Internationale Veröffentlichungsnummer: WO 2015/193304

(56) Entgegenhaltungen:
- EP-A1- 2 527 702
- WO-A1-98/42924
- WO-A1-2006/136306
- DE-A1-102008 018 658
- FR-A1- 2 478 161
- US-A- 3 407 837
- US-A- 5 018 260
- US-A1- 2009 034 949

## Beschreibung

Die Erfindung betrifft eine Fluidleitung mit einem Rohr, das einen eingangsseitigen Endabschnitt mit einem ersten Verbinder und einem ausgangsseitigen Endabschnitt mit einem zweiten Verbinder aufweist, wobei im Rohr ein radial innen durch mindestens ein Hilfselement begrenzter Hohlraum ausgebildet ist.

Dokument DE 10 2008 018 658 A1 offenbart eine als Medienleitung im Fahrzeugbau einsetzbares beheizbares Leitungselement. Letzteres besteht aus einem äußeren, der Medienführung dienenden Rohr, innerhalb welchem sich ein Heizleiter erstreckt. Dieser besteht aus einem, zwei elektrische Leiter aufnehmenden, aus einem PTC-Kunststoff bestehenden, streifenförmigen Formkörper, an welchem zwei, einander in einer Ebene senkrecht zu dem Formkörper diametral gegenüberliegende Längsrippen angeformt sind.

Dokument US 5,018,260 A1 offenbart eine doppelwandige Rohranordnung mit einem Innenrohr und einem Außenrohr. Eine verformbare Klammer wird auf das Innenrohr aufgeclipst, um das Innenrohr im Außenrohr zu zentrieren.

Die Erfindung wird im Folgenden in Verbindung mit einer Fluidleitung beschrieben, die zum Transport einer Harnstofflösung (Urea) von einem Vorratsbehälter zu einer Einspritzanordnung verwendet wird. Urea wird mit Hilfe der Einspritzanordnung in einen Abgasstrang eines Dieselmotors eingespritzt, um Stickoxide zu reduzieren.

Bei niedrigen Temperaturen friert Urea ein. Wenn Urea einfriert, besteht die Gefahr, dass die in der Einspritzanordnung verbliebene Menge an Urea die Einspritzanordnung beschädigt.

Um das Risiko einer Beschädigung der Einspritzanordnung durch einfrierendes Urea zu vermeiden, kann man nach dem Abstellen des Motors die Harnstofflösung aus der Leitung zurücksaugen, so dass zumindest die Einspritzanordnung von Urea frei wird. Zum Zurücksaugen möchte man gerne die gleiche Pumpe verwenden, die auch zum Fördern von Urea vom Vorratsbehälter zur Einspritzanordnung verwendet wird. Diese Pumpe ist aber in erster Linie eine Förderpumpe, die Urea vom eingangsseitigen Endabschnitt des Rohrs zum ausgangsseitigen Endabschnitt fördert, also mit einem gewissen Druck. Die Saugleistung einer derartigen Pumpe ist in der Regel deutlich schlechter.

Der Erfindung liegt die Aufgabe zugrunde, die Anforderungen an die Saugleistung einer Pumpe klein zu halten.

Diese Aufgabe wird erfindungsgemäß durch die Merkmale von Anspruch 1 gelöst.

Bei einer Urea-Leitung ist im Hohlraum vielfach bereits ein Heizelement angeordnet, das den Hohlraum radial innen begrenzt. Vereinfacht ausgedrückt ist in diesem Fall der Hohlraum als ringförmiger Hohlraum ausgebildet. Das Heizelement kann allerdings auch durch mehrere Elemente gebildet sein oder es können weitere Elemente im Inneren des Rohres angeordnet sein, so dass der Begriff "ringförmig" nicht in allen Fällen zutrifft. Er wird im Folgenden aus Zwecken der Einfachheit verwendet. Das Hilfselement vermindert zwar das freie Volumen im Inneren des Rohres. Dennoch verbleibt ein Volumen, das relativ groß ist und an die Saugleistung der Pumpe eine erhöhte Anforderung stellt. Wenn man nun zusätzlich zu dem Hilfselement ein Volumenreduktionselement im Hohlraum anordnet, dann wird das verbleibende Volumen des Hohlraumes weiter vermindert. Damit vermindert sich auch die mögliche Menge einer Flüssigkeit, die noch im Inneren des Rohres verbleiben kann und die zurückgesaugt werden muss. Je kleiner diese Flüssigkeitsmenge ist, desto geringer ist die Anforderung an die Saugleistung der Pumpe. Erstaunlicherweise reicht es hierbei in vielen Fällen aus, das Volumenreduktionselement nur im ausgangsseitigen Endabschnitt anzuordnen. Wenn die Pumpe dann am eingangsseitigen Endabschnitt die Flüssigkeit aus dem Inneren des Rohres zurücksaugt, dann wird durch die Verringerung des freien Volumens im Bereich des ausgangsseitigen Endabschnitts ein ausreichender Saugdruck erzeugt, um die Einspritzanordnung frei zu saugen. Zusätzlich hat dies den Vorteil, dass die Bereiche des Rohres, die mit dem Volumenreduktionselement versehen sind, relativ schnell leer gesaugt werden können, so dass in diesen Bereichen nur noch Luft vorhanden ist, die dem Saugen der Pumpe einen noch kleineren Widerstand entgegensetzt. Es ergibt sich also insgesamt ein schnelleres Leersaugen der Einspritzanordnung und gegebenenfalls auch der gesamten Fluidleitung.

Vorzugsweise erstreckt sich das Volumenreduktionselement über den ausgangsseitigen Endabschnitt hinaus in Richtung auf den eingangsseitigen Endabschnitt. Man kann im Grunde das gesamte Rohr mit einem Volumenreduktionselement versehen, um das freie Volumen im Inneren des Rohres kleinzuhalten. Damit ergibt sich zwar ein größerer Strömungswiderstand, der sich dem Durchfluss einer Flüssigkeit vom eingangsseitigen Ende zum ausgangsseitigen Ende entgegensetzt. Bei der Verwendung der Fluidleitung zum Transport von Urea zu einem Dieselmotor ist dies jedoch unkritisch, da hier keine größeren Urea-Mengen schnell bewegt werden müssen.

Erfindungsgemäß weist das Volumenreduktionselement mehrere Abschnitte auf, wobei zwischen mindestens zwei Abschnitten eine Lücke vorgesehen ist. Dadurch wird die Montage der Leitung erleichtert. Man kann die Abschnitte des Volumenreduktionselements einzeln montieren, was insbesondere bei längeren Leitungen einen gewissen Vorteil darstellt.

Hierbei ist bevorzugt, dass das Rohr einen gekrümmten Abschnitt aufweist und die Lücke im gekrümmten Abschnitt angeordnet ist. In vielen Fällen wird die Leitung so gefertigt, dass das Hilfselement und das Volumenreduktionselement in ein geradlinig ausgestrecktes Rohr eingesetzt werden. Danach wird das Rohr gebogen, um den gekrümmten Abschnitt zu erzeugen. Gegebenenfalls ist hier eine Erwärmung des Rohres erforderlich. Wenn man im Bereich des gekrümmten Abschnitts eine Lücke zwischen zwei Abschnitten des Volumenreduktionselements vorsieht, dann behindert das Volumenreduktionselement die Ausbildung der Krümmung nicht. Insbesondere verhindert man dadurch einen Verschluss des Innenraums des Rohres im Bereich des gekrümmten Abschnitts.

Vorzugsweise erstreckt sich das Volumenreduktionselement über die gesamte Länge des Rohres. Damit wird in der gesamten Länge des Rohres das Volumen klein gehalten. Lücken zwischen Abschnitten des Volumenreduktionselements stören dabei praktisch nicht, weil sie das für Flüssigkeit zur Verfügung stehende Volumen, das leer gesaugt werden müsste, nicht übermäßig stark vergrößern.

Erfindungsgemäß weist das Volumenreduktionselement eine sich entlang der Länge des Rohres erstreckende Ausnehmung auf. Das Volumenreduktionselement vermindert zwar den freien Strömungsquerschnitt für eine Flüssigkeit, die vom eingangsseitigen Ende zum ausgangsseitigen Ende fließt. Es erhöht jedoch die benetzte Fläche, so dass sich daraus ein erhöhter Strömungswiderstand ergibt, der insbesondere beim Zurücksaugen des Fluids wiederum höhere Anforderungen an die Pumpe verursachen könnte. Die Ausnehmung stellt in diesem Fall einen durchgehenden Strömungskanal zur Verfügung, der eine relativ kleine benetzte Fläche und damit auch einen relativ kleinen Strömungswiderstand aufweist. Das für die Flüssigkeit zur Verfügung stehende Volumen wird durch die Ausnehmung nicht übermäßig stark vergrößert.

Vorzugsweise liegt das Volumenreduktionselement an der radialen Innenseite und/oder an der radialen Außenseite des Hohlraumes an. Damit wird eine definierte Position des Volumenreduktionselements erreicht. In der Regel wird das Volumenreduktionselement nur an der radialen Innenseite oder nur an der radialen Außenseite des Hohlraumes anliegen. Wenn jedoch das Volumenreduktionselement in mehrere Abschnitte unterteilt ist, ist es möglich, einen Teil der Abschnitte an der radialen Innenseite und einen Teil der Abschnitte an der radialen Außenseite des Hohlraumes anliegen zu lassen.

Hierbei ist bevorzugt, dass das Volumenreduktionselement unter einer Spannung an der radialen Innenseite und/oder an der radialen Außenseite des Hohlraumes anliegt. Damit wird die Reibung zwischen dem Volumenreduktionselement und der radialen Innenseite des Hohlraumes bzw. zwischen dem Volumenreduktionselement und der radialen Außenseite des Hohlraumes relativ groß gemacht, so dass das Volumenreduktionselement nicht durch vorbeiströmende Flüssigkeit verschoben werden kann. Das Volumenreduktionselement klemmt sozusagen im Hohlraum fest.

Zusätzlich oder alternativ dazu kann vorgesehen sein, dass das Volumenreduktionselement mit der radialen Innenseite und/oder der radialen Außenseite des Hohlraumes verbunden ist. Eine derartige Verbindung kann beispielsweise durch Kleben, Schweißen oder dergleichen realisiert werden. Damit wird das Volumenreduktionselement unverschiebbar im Hohlraum gehalten. Auch ist von Vorteil, wenn das Hilfselement zumindest in dem zweiten Verbinder eintritt und mit einem Anschlussstutzen des zweiten Verbinders einen Ringspalt bildet, wobei der Ringspalt eine Querschnittsfläche aufweist, die den 0,7- bis 1,3-fachen einer Querschnittsfläche des mit dem Volumenreduktionselements versehenen Hohlraumes entspricht. Auch im Verbinder kann dann allenfalls eine relativ kleine Menge an Flüssigkeit verbleiben, die von der Pumpe problemlos zurückgesaugt werden kann.

Die Erfindung wird im Folgenden anhand eines bevorzugten Ausführungsbeispiels in Verbindung mit der Zeichnung beschrieben. Hierin zeigen:
- Fig. 1: eine stark schematisierte Schnittansicht einer Fluidleitung und
- Fig. 2: einen Schnitt II-II nach Fig. 1.

Eine Fluidleitung 1 weist ein Rohr 2 auf, das einen eingangsseitigen Endabschnitt 3 und einen ausgangsseitigen Endabschnitt 4 aufweist.

Am eingangsseitigen Endabschnitt 3 ist ein erster Verbinder 5 angeordnet. Der erste Verbinder 5 weist einen Stutzen 6 auf, auf den das Rohr 2 aufgeschoben ist. Der erste Verbinder 5 weist weiterhin eine Anschlussgeometrie 7 auf, die mit einer schematisch dargestellten Pumpe 8 verbunden ist. Die Pumpe 8 weist, wie dies durch einen Doppelpfeil 9 angedeutet ist, eine umschaltbare Förderrichtung auf, d.h. die Pumpe 8 kann eine Flüssigkeit in die Leitung 1 hineinfördern oder sie kann die Flüssigkeit aus der Leitung 1 heraussaugen.

Am ausgangsseitigen Endabschnitt 4 ist ein zweiter Verbinder 10 angeordnet. Der zweite Verbinder 10 weist ebenfalls einen Stutzen 11 auf, auf den das Rohr 2 aufgeschoben ist. Der zweite Verbinder 10 weist eine Anschlussgeometrie 12 auf, die mit einer Einspritzanordnung 13 verbunden ist. Die Einspritzanordnung 13 weist eine schematisch dargestellte Düse 14 auf. Es können auch mehrere Düsen vorgesehen sein. Der Düse 14 vorgeschaltet ist ein elektrisch betätigbares Ventil 15, so dass eine Flüssigkeit aus der Leitung 1 gezielt über die Einspritzanordnung 13 ausgegeben werden kann.

Im Rohr 2 ist eine Hilfseinrichtung 16 angeordnet, die im vorliegenden Fall als Heizstab ausgebildet ist. Die Hilfseinrichtung 16 ist sowohl in den Stutzen 6 des ersten Verbinders 5 als auch in den Stutzen 11 des zweiten Verbinders 10 eingeführt. Die Hilfseinrichtung 16 verlässt den ersten Verbinder 5 und den zweiten Verbinder 10 seitlich, also aus der Zeichenebene heraus, so dass man zumindest in einem der Verbinder 5, 10 dem Hilfselement 16 elektrische Energie zuführen kann, um eine Heizleistung zu erzeugen.

Zwischen dem Rohr 2 und dem Hilfselement 16 ist ein Hohlraum 17 angeordnet. Wenn lediglich ein einzelnes Hilfselement 16 im Inneren des Rohres 2 angeordnet ist, dann kann der Hohlraum 17 als "ringförmig" bezeichnet werden. Diese Bezeichnung wird aus Gründen der Einfachheit auch beibehalten und gilt auch dann, wenn anstelle eines einzelnen Hilfselements 16 beispielsweise zwei oder mehr Hilfselemente 16 vorgesehen sind, beispielsweise zwei parallel verlaufende Heizdrähte.

Der Hohlraum 17 hat ein Volumen, das radial außen durch das Rohr 2 und radial innen durch das Hilfselement 16 begrenzt ist. Da das Hilfselement 16 auch durch die Stutzen 6, 11 der Verbinder 5, 10 treten muss und das Rohr 2 auf die Stutzen 6, 11 aufgeschoben ist und somit einen größeren Innendurchmesser als die Stutzen 6, 11 aufweist, hat der Hohlraum 17 zwangsläufig eine relativ große radiale Erstreckung und damit auch ein relativ großes Volumen. Ein großes Volumen stellt an die Saugleistung der Pumpe 8 erhebliche Anforderungen.

Um diese Anforderungen kleinzuhalten, ist im Hohlraum 17 ein Volumenreduktionselement 18 angeordnet, das aus mehreren Abschnitten 18a, 18b, 18c gebildet ist. Zwischen den Abschnitten 18a und 18b ist eine Lücke 19a. Zwischen den Abschnitten 18b und 18c ist eine Lücke 19b angeordnet. Die Lücken 19a und 19b befinden sich jeweils in gekrümmten Abschnitten 20, 21 des Rohres 2.

Bei der Herstellung der Fluidleitung 1 ist das Rohr 2 zunächst gerade gestreckt. Auch das Hilfselement 16 ist gerade gestreckt ausgebildet und kann somit problemlos in das gerade gestreckte Rohr 2 eingeschoben werden. Auch die Abschnitte 18-18c des Volumenreduktionselements 18 können in diesem Zustand problemlos in das Innere des Rohres 2 eingebracht werden. Üblicherweise werden auch die Verbinder 5, 10 in die Endabschnitte 3, 4 des Rohres 2 eingesetzt. Danach wird das Rohr 2 in Form gebracht und kann dann thermofixiert werden. Die Lücken 19a, 19b stören dabei die Ausbildung der gekrümmten Abschnitte 20,21 des Rohres 2 nicht.

Das Volumenreduktionselement 18 kann mehr als die dargestellten drei Abschnitte 18a, 18b, 18c aufweisen. Außerhalb der gekrümmten Abschnitte 20,21 des Rohres 2 können die Abschnitte durchaus aneinander stoßen, so dass keine merkliche Lücke entsteht. Die Lücken 19a, 19b sind hier aus Gründen der Übersicht übertrieben groß dargestellt.

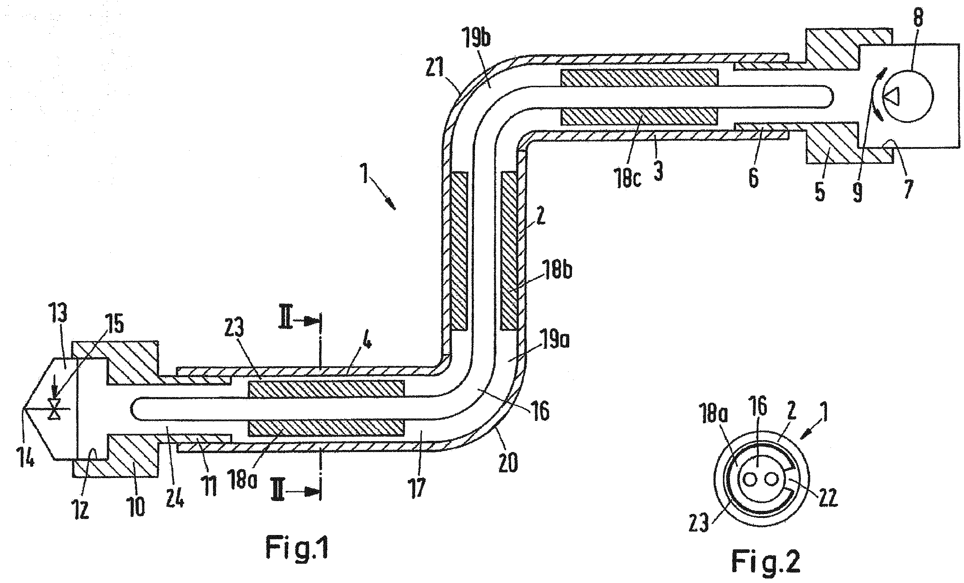

Die Abschnitte 18a, 18c liegen mit ihrer radialen Innenseite am Hilfselement 16 an. Wie man in Fig. 2 erkennen kann, weist der Abschnitt 18a des Volumenreduktionselements eine Ausnehmung 22 auf, die sich entlang der Länge des Rohres 2 erstreckt.

Zwischen dem Abschnitt 18a des Volumenreduktionselements 18 und dem Rohr 2 ist ein Spalt 23 ausgebildet, in dem zwar das für Flüssigkeit zur Verfügung stehende Volumen stark vermindert worden ist. Die Zeichnung ist hier nicht maßstäblich zu verstehen. Es ergibt sich allerdings eine relativ große benetzte Fläche, die den Strömungswiderstand für die Flüssigkeit in dem Spalt 23 erhöht. Dieser Strömungswiderstand kann unter Umständen zu Problemen beim Rücksaugen der Flüssigkeit durch die Pumpe 8 führen. Die Ausnehmung 22 stellt hingegen einen Strömungskanal zur Verfügung, bei dem eine weitaus geringere benetzte Fläche vorhanden ist und der somit einen relativ geringen Strömungswiderstand hat, der das Zurücksaugen der Flüssigkeit aus dem Rohr 2 ermöglicht.

Erfindungsgemäß ist der Abschnitt 18a als C-förmige Klammer ausgebildet, die einfach aus einem in Längsrichtung geschlitzten Rohrabschnitt besteht, dessen Innendurchmesser kleiner ist als der Außendurchmesser des Hilfselements 16. Der Abschnitt 18a des Volumenreduktionselements 18 kann dann auf das Hilfselement 16 aufgeclipst werden, bevor das Hilfselement 16 in das Rohr 2 eingeschoben wird. Der Abschnitt 18a hält dann mit einer gewissen Spannung auf dem Hilfselement 16 fest.

Natürlich kann der Abschnitt 18a mit dem Hilfselement 16 auch verklebt oder verschweißt werden, wenn dies erforderlich sein sollte.

Der Abschnitt 18c des Volumenreduktionselements ist entsprechend ausgebildet und auf das Hilfselement 16 aufgeclipst. Der Abschnitt 18b liegt hingegen mit seiner radialen Außenseite an der radialen Innenseite des Rohres 2 an. Auch hier kann man den Abschnitt 18b mit einer Vorspannung radial nach außen versehen, so dass er unter einer gewissen Spannung an der Innenseite des Rohres 2 anliegt. Auch hier ist dann vorteilhafterweise eine Ausnehmung 22 vorgesehen, die einen Strömungskanal bildet.

Üblicherweise wird man alle Abschnitte 18a-18c entweder an dem Hilfselement 16 festlegen oder an der Innenseite des Rohres 2. Die Darstellung der Fig. 1 wurde gewählt, um zu zeigen, dass es unterschiedliche Möglichkeiten gibt, um die Abschnitte 18a-18c im Hohlraum 17 zu positionieren.

Die Darstellung in der Zeichnung ist nicht maßstäblich.

Es ist zu erkennen, dass das Hilfselement 16 in den zweiten Verbinder 10 eintritt und mit dem Anschlussstutzen 11 einen Ringspalt 24 ausbildet. Dieser Ringspalt 24 weist eine Querschnittsfläche auf, die 70 % bis 130 % einer Querschnittsfläche des Spalts 23 entspricht. Mit anderen Worten ist die Querschnittsfläche des Ringspalts 24 etwa gleich groß wie die Querschnittsfläche des Spalts 23.

## Patentansprüche

1. Fluidleitung (1) mit einem Rohr (2), das einen eingangsseitigen Endabschnitt (3) mit einem ersten Verbinder (5) und einen ausgangsseitigen Endabschnitt (4) mit einem zweiten Verbinder (10) aufweist, wobei im Rohr (2) ein radial innen durch mindestens ein Hilfselement (16) begrenzter Hohlraum (17) ausgebildet ist, wobei das Hilfselement (16) als Heizstab ausgebildet ist und im Hohlraum (17) zumindest im Bereich des ausgangsseitigen Endabschnitts (4) ein Volumenreduktionselement (18) angeordnet ist, wobei das Volumenreduktionselement (18) eine sich entlang der Länge des Rohres (2) erstreckende Ausnehmung (22) aufweist, die einen durchgehenden Strömungskanal zur Verfügung stellt, **dadurch gekennzeichnet, dass** das Volumenreduktionselement (18) mehrere Abschnitte (18a-18c) aufweist, wobei zwischen mindestens zwei Abschnitten (18a, 18b; 18b, 18c) eine Lücke (19a, 19b) vorgesehen ist, wobei einer der Abschnitte (18a) als C-förmige Klammer ausgebildet ist, die aus einem in Längsrichtung geschlitzten Rohrabschnitt besteht, dessen Innendurchmesser kleiner ist als der Außendurchmesser des Hilfselements (16).

2. Fluidleitung nach Anspruch 1, **dadurch gekennzeichnet, dass** sich das Volumenreduktionselement (18) über den ausgangsseitigen Endabschnitt (4) hinaus in Richtung auf den eingangsseitigen Endabschnitt (3) erstreckt.

3. Fluidleitung nach einem der Ansprüche 1 oder 2, **dadurch gekennzeichnet, dass** das Rohr (2) einen gekrümmten Abschnitt (20, 21) aufweist und die Lücke (19a, 19b) im gekrümmten Abschnitt (20,21) angeordnet ist.

4. Fluidleitung nach einem der Ansprüche 1 bis 4, **dadurch gekennzeichnet, dass** sich das Volumenreduktionselement (18) über die gesamte Länge des Rohres (2) erstreckt.

5. Fluidleitung nach einem der Ansprüche 1 bis 4, **dadurch gekennzeichnet, dass** das Volumenreduktionselement (18) an der radialen Innenseite und/oder an der radialen Außenseite des Hohlraumes (17) anliegt.

6. Fluidleitung nach Anspruch 5, **dadurch gekennzeichnet, dass** das Volumenreduktionselement (18) unter einer Spannung an der radialen Innenseite und/oder an der radialen Außenseite des Hohlraumes (17) anliegt.

7. Fluidleitung nach Anspruch 5 oder 6, **dadurch gekennzeichnet, dass** das Volumenreduktionselement (18) mit der radialen Innenseite und/oder der radialen Außenseite des Hohlraums (17) verbunden ist.

8. Fluidleitung nach einem der Ansprüche 1 bis 7, **dadurch gekennzeichnet, dass** das Hilfselement (16) zumindest in den zweiten Verbinder (10) eintritt und mit einem Anschlussstutzen (11) des zweiten Verbinders (10) einen Ringspalt (24) bildet, wobei der Ringspalt (24) eine Querschnittsfläche aufweist, die dem 0,7 - bis 1,3 - fachen einer Querschnittsfläche des mit dem Volumenreduktionselement (18) versehenen Hohlraums (17) entspricht.

9. Fluidleitung nach einem der Ansprüche 1 bis 8, **dadurch gekennzeichnet, dass** diese eine Pumpe (8) und eine Einspritzanordnung (13) aufweist, wobei der erste Verbinder (5) einen Stutzen (6), auf den das Rohr (2) aufgeschoben ist, und eine Anschlussgeometrie (7), die mit der Pumpe (8) verbunden ist, aufweist, wobei die Pumpe (8) eine umschaltbare Förderrichtung aufweist, und wobei der zweite Verbinder (10) einen Stutzen (11), auf den das Rohr (2) aufgeschoben ist, und eine Anschlussgeometrie (12), die mit der Einspritzanordnung (13) verbunden ist, aufweist.

10. Verwendung einer Fluidleitung nach Anspruch 9 zum Transport einer Harnstofflösung von einem Vorratsbehälter zu der Einspritzanordnung (13), wobei die Harnstofflösung mit Hilfe der Einspritzanordnung (13) in einen Abgasstrang eines Dieselmotors eingespritzt wird, um Stickoxide zu reduzieren.

## Claims

1. Fluid line (1) having a tube (2), which has an input-side end section (3) with a first connector (5) and an output-side end section (4) with a second connector (10), wherein a cavity (17) is configured in the tube (2), delimited radially inwardly by at least one auxiliary element (16), wherein the auxiliary element (16) is configured as a heating rod and in the cavity (17) at least one volume reduction element (18) is arranged in the region of the output-side end section (4), wherein the volume reduction element (18) has a recess (22) extending along the length of the tube (2), which provides a continuous flow channel, **characterised in that** the volume reduction element (18) has a plurality of sections (18a-18c), wherein a gap (19a, 19b) is provided between at least two sections (18a, 18b; 18b, 18c), wherein one of the sections (18a) is formed as an egg-shaped bracket comprising a longitudinally slotted tube portion whose inner diameter is smaller than the outer diameter of the auxiliary element (16).

2. Fluid line according to claim 1, **characterised in that** the volume reduction element (18) extends beyond the output-side end section (4) in the direction of the input-side end section (3).

3. Fluid line according to any one of claims 1 or 2, **characterised in that** the tube (2) has a curved section (20, 21) and the gap (19a, 19b) is arranged in the curved section (20, 21).

4. Fluid line according to any one of claims 1 to 4, **characterised in that** the volume reduction element (18) extends over the entire length of the tube (2).

5. Fluid line according to any one of claims 1 to 4, **characterised in that** the volume reduction element (18) adjoins the radial inside and/or the radial outside of the cavity (17).

6. Fluid line according to claim 5, **characterised in that** the volume reduction element (18) adjoins the radial inside and/or the radial outside of the cavity (17) under tension.

7. Fluid line according to claim 5 or 6, **characterised in that** the volume reduction element (18) is connected to the radial inside and/or the radial outside of the cavity (17).

8. Fluid line according to any one of claims 1 to 7, **characterised in that** the auxiliary element (16) enters into at least the second connector (10) and forms an annular gap (24) with a connecting piece (11) of the second connector (10), wherein the annular gap (24) has a cross-sectional area corresponding to 0.7 to 1.3 times a cross-sectional area of the cavity (17) provided with the volume reduction element (18).

9. Fluid line according to any one of claims 1 to 8, **characterised in that** said fluid line comprises a pump (8) and an injection assembly (13), wherein the first connector (5) has a nozzle (6) onto which the tube (2) is pushed, and a connection geometry (7) which is connected to the pump (8), wherein the pump (8) has a switchable feeding direction, and wherein the second connector (10) has a nozzle (11) onto which the tube (2) is pushed, and a connection geometry (12) which is connected to the injection assembly (13).

10. Use of a fluid line according to claim 9 for transporting a urea solution from a reservoir to the injection assembly (13), wherein the urea solution is injected by means of the injection assembly (13) into an exhaust line of a diesel engine to reduce nitrogen oxides.

## Revendications

1. Conduite de fluide (1) avec un tube (2), qui présente une section d'extrémité côté entrée (3) avec un premier connecteur (5) et une section d'extrémité côté sortie (4) avec un deuxième connecteur (10), dans laquelle un espace creux (17) délimité radialement à l'intérieur par au moins un élément auxiliaire (16) est réalisé dans le tube (2), dans laquelle l'élément auxiliaire (16) est réalisé en tant que tige chauffante et un élément de réduction de volume (18) est agencé dans l'espace creux (17) au moins dans la zone de la section d'extrémité côté sortie (4), dans laquelle l'élément de réduction de volume (18) présente un évidement (22) s'étendant le long de la longueur du tube (2), qui met à disposition un canal d'écoulement continu, **caractérisée en ce que**
l'élément de réduction de volume (18) présente plusieurs sections (18a-18c), dans laquelle un interstice (19a, 19b) est prévu entre au moins deux sections (18a, 18b ; 18b, 18c), dans laquelle une des sections (18a) est réalisée en tant que pince en forme de C, qui se compose d'une section de tube fendue dans la direction longitudinale, dont le diamètre intérieur est inférieur au diamètre extérieur de l'élément auxiliaire (16).

2. Conduite de fluide selon la revendication 1, **caractérisée en ce que** l'élément de réduction de volume (18) s'étend au-delà de la section d'extrémité côté sortie (4) en direction de la section d'extrémité côté entrée (3).

3. Conduite de fluide selon l'une quelconque des revendications 1 ou 2, **caractérisée en ce que** le tube (2) présente une section incurvée (20, 21) et l'interstice (19a, 19b) est agencé dans la section incurvée (20, 21).

4. Conduite de fluide selon l'une quelconque des revendications 1 à 4, **caractérisée en ce que** l'élément de réduction de volume (18) s'étend sur toute la longueur du tube (2).

5. Conduite de fluide selon l'une quelconque des revendications 1 à 4, **caractérisée en ce que** l'élément de réduction de volume (18) s'applique sur le côté intérieur radial et/ou sur le côté extérieur radial de l'espace creux (17).

6. Conduite de fluide selon la revendication 5, **caractérisée en ce que** l'élément de réduction de volume (18) s'applique sous une tension sur le côté intérieur radial et/ou sur le côté extérieur radial de l'espace creux (17).

7. Conduite de fluide selon la revendication 5 ou 6, **caractérisée en ce que** l'élément de réduction de volume (18) est relié au côté intérieur radial et/ou au côté extérieur radial de l'espace creux (17).

8. Conduite de fluide selon l'une quelconque des revendications 1 à 7, **caractérisée en ce que** l'élément auxiliaire (16) entre au moins dans le deuxième connecteur (10) et forme avec une tubulure de raccordement (11) du deuxième connecteur (10) une fente annulaire (24), dans laquelle la fente annulaire (24) présente une section transversale, qui correspond à 0,7 à 1,3 fois une section transversale de l'espace creux (17) doté de l'élément de réduction de volume (18).

9. Conduite de fluide selon l'une quelconque des revendications 1 à 8, **caractérisée en ce que** celle-ci présente une pompe (8) et un agencement d'injection (13), dans laquelle le premier connecteur (5) présente une tubulure (6), sur laquelle le tube (2) est enfoncé, et une géométrie de raccordement (7), qui est reliée à la pompe (8), dans laquelle la pompe (8) présente une direction de transport commutable, et dans laquelle le deuxième connecteur (10) présente une tubulure (11), sur laquelle le tube (2) est enfoncé, et une géométrie de raccordement (12), qui est reliée à l'agencement d'injection (13).

10. Utilisation d'une conduite de fluide selon la revendication 9 pour le transport d'une solution d'urée d'un réservoir à l'agencement d'injection (13), dans laquelle la solution d'urée est injectée dans une ligne d'échappement d'un moteur diesel à l'aide de l'agencement d'injection (13), pour réduire des oxydes d'azote.
